# EUROPÄISCHE PATENTSCHRIFT

(11) **EP 2 912 346 B1**
(45) Veröffentlichungstag und Bekanntmachung des Hinweises auf die Patenterteilung: **28.02.2018**
(21) Anmeldenummer: 13776961.8
(22) Anmeldetag: 04.10.2013
(51) Int. Cl.: F16H 3/08, F16H 3/04

(54) **GESCHWINDIGKEITS-WECHSELGETRIEBE FÜR KRAFTFAHRZEUGE**
CHANGE-SPEED GEARBOX FOR MOTOR VEHICLES
TRAIN D'ENGRENAGES À CHANGEMENT DE VITESSE POUR VÉHICULES AUTOMOBILES

(30) Priorität: 24.10.2012 DE 102012020884
(43) Veröffentlichungstag der Anmeldung: 02.09.2015
(73) Patentinhaber: Audi AG, 85045 Ingolstadt (DE)
(72) Erfinder: MEIXNER, Christian, 85049 Ingolstadt (DE); MÄRKL, Johann, 86633 Neuburg a. d. Donau (DE)
(74) Vertreter: Lehle, Josef
(86) Internationale Anmeldenummer: PCT/EP2013/002991
(87) Internationale Veröffentlichungsnummer: WO 2014/063779

(56) Entgegenhaltungen:
- EP-A2- 2 487 385
- DE-A1-102006 042 567
- DE-C- 652 741
- GB-A- 1 515 474
- US-A- 1 884 380

## Beschreibung

Die vorliegende Erfindung betrifft ein Geschwindigkeits-Wechselgetriebe für Kraftfahrzeuge, insbesondere ein Schaltgetriebe, gemäß dem Oberbegriff des Patentanspruchs 1.

Durch die US 1 987 ,897 A ist ein Schaltgetriebe mit zwei Vorwärtsgängen bekannt, bei dem eine Hohlradstufe zur Erzielung unterschiedlicher Übersetzungsverhältnisse verwendet ist. Dabei treibt ein Zahnrad auf einer Vorgelegewelle entweder direkt auf das außenverzahnte Hohlrad oder ein weiteres Zahnrad auf der Vorgelegewelle über eine achsversetzte Welle auf ein Zahnrad und dieses über die Welle auf ein mit einer Innenverzahnung des Hohlrads kämmendes Stirnzahnrad. Der daraus resultierende Getriebeaufbau ist relativ kompliziert und kaum für Getriebe mit mehr als zwei Vorwärtsgängen und gegebenenfalls einem Rückwärtsgang realisierbar. Die DE 652 741 C offenbart ein Geschwindigkeitswechselgetriebe für Kraftfahrzeuge, mit zwei Vorwärtsgängen, mit einer Eingangswelle, einer Abtriebswelle und einer Vorgelegewelle, zwischen denen ein über eine Kupplung schaltbares Loszahnrad und ein Festzahnrad eines Gangzahnradsatzes angeordnet sind, wobei die Abtriebswelle zweiteilig mit zwei Teilwellen ausgeführt ist, welche Teilwellen mit zueinander unterschiedlichen, mit einem Achsversatz versetzten Drehachsen im Getriebegehäuse gelagert sind, wobei funktionell zwischen den beiden Teilwellen eine Hohlradstufe mit einem innenverzahnten Hohlrad und einem mit diesem kämmenden, außenverzahnten Stirnzahnrad vorgesehen ist.

Aus der DE 10 2006 042 567 A1 ist ein Sechsgang-Handschaltgetriebe bekannt. Aus der US 1 884 380 A, aus der GB. 1 515 474 A sowie aus der EP 2 487 385 A2 sind weitere Geschwindigkeits-Wechseigetriebe für Kraftfahrzeuge bekannt.

Aufgabe der Erfindung ist es, ein Wechselgetriebe vorzuschlagen, das bei einem relativ einfachen Getriebeaufbau größere konstruktive Freiheitsgrade insbesondere in der erzielbaren Spreizung der Übersetzungsverhältnisse ermöglicht.

Die Lösung dieser Aufgabe ist in den Merkmalen des Patentanspruchs 1 abgeführt. Vorteilhafte Weiterbildungen und Ausgestaltungen der Erfindung sind Gegenstand der abhängigen Ansprüche.

Erfindungsgemäß wird vorgeschlagen, dass zumindest eine der Wellen zweiteilig ausgeführt und mit zueinander unterschiedlichen Drehachsen im Getriebegehäuse gelagert ist, dass funktionell zwischen den Teilwellen eine Hohlradstufe mit einem innenverzahnten Hohlrad und einem mit diesem kämmenden, außenverzahnten Stirnzahnrad vorgesehen ist, wobei die Teilwelle mit dem größeren Achsabstand zur anderen Welle Gangzahnräder der niedrigeren Vorwärtsgänge und gegebenenfalls des Rückwärtsganges trägt. Die Hohlradstufe bewirkt als solches bereits eine Beeinflussung der Übersetzungsverhältnisse für mehrere, im Kraftfluss vor- oder nachgeschaltete Gänge und ermöglicht zudem einen größeren Achsabstand der korrespondierenden Teilwelle zur benachbarten Welle mit dem Ergebnis der verbesserten Unterbringung größerer, niedrigere Übersetzungsverhältnisse ermöglichender Gangzahnradsätze. Daraus resultiert neben einem einfacheren, kompakten Getriebeaufbau bei zum Beispiel sechs Vorwärtsgängen und einem Rückwärtsgang eine Spreizung in den Übersetzungsverhältnissen von 6 oder mehr.

Bei einem sogenannten Ständardantrieb, bei dem die Eingangswelle und die Abtriebswelle koaxial angeordnet sind, ist erfindungsgemäß die Hohlradstufe auf der Gangzahnräder tragenden Vorgelegewelle angeordnet, was den Getriebeaufbau (im Gegensatz zu der eingangs genannten, bekannten Konstruktion) wesentlich vereinfacht.

In einer vorteilhaften Weiterbildung der Erfindung zum Beispiel für automatisch geschaltete Wechselgetriebe kann die Hohlradstufe zugleich als Zahnradpumpe bzw. Sichelpumpe zum Fördern von Schmieröl oder Hydrauliköl ausgebildet sein. Damit kann die Hohlradstufe bei entsprechender Gehäuseauslegung (Saug- und Drucknieren, integrierte Kanäle) eine weitere Funktion ausüben, wodurch baulich und fertigungstechnisch günstig eine separate Förderpumpe zur Versorgung der Getriebesteuerung entfallen kann.

Ein Ausführungsbeispiel der Erfindung ist im Folgenden anhand der anliegenden Blockschaltbilder näher erläutert.

Es zeigen:
- Fig. 1: ein Schaltgetriebe für Kraftfahrzeuge mit sechs Vorwärtsgängen und einem Rückwärtsgang, deren Gangzahnradsätze auf einer Eingangswelle und einer Abtriebswelle angeordnet sind, sowie mit einer Hohlradstufe auf der zweigeteilten Eingangswelle, die zwischen niedrigeren und höheren Gangzahnradsätzen vorgesehen ist;
- Fig. 2: das Schaltgetriebe nach Fig. 1, bei dem die Hohlradstufe auf einer zweigeteilten Abtriebswelle angeordnet ist;
- Fig. 3: ein Schaltgetriebe gemäß Fig. 1, bei dem die Hohlradstufe zwischen einer durchgehenden Eingangswelle und einer rücktreibenden, Zahnräder der niedrigeren Gangzahnradsätze tragenden Hohlwelle vorgesehen ist;
- Fig. 4: ein Schaltgetriebe gemäß Fig. 1, bei dem die Hohlradstufe zwischen einer durchgehenden Abtriebswelle und einer die Zahnräder der niedrigeren Gangzahnradsätze tragenden Hohlwelle angeordnet ist;
- Fig. 5: ein Schaltgetriebe nach Fig. 3, bei dem die Hohlradstufe eine Schaltkupplung aufweist, mittels der die korrespondierende Hohlwelle abschaltbar ist;
- Fig. 6: ein Schaltgetriebe für ein allradgetriebenes Kraftfahrzeug mit einer Hohlradstufe auf der Eingangswelle, einer als Hohlwelle ausgeführten Abtriebswelle, die auf ein integriertes Zwischenachsdifferenzial antreibt, dessen Ausgangswellen mit einem Vorderachsdifferenzial und einem Hinterachsdifferenzial des Kraftfahrzeugs trieblich verbunden sind;
- Fig. 7: ein Schaltgetriebe nach Fig. 3, bei dem die an der Eingangswelle angeordnete Hohlradstufe zugleich als Zahnradpumpe zum Fördern von Hydraulikfluid für eine Getriebesteuerung ausgebildet ist; und
- Fig. 8: ein erfindunsggemäßes Schaltgetriebe für Kraftfahrzeuge mit einer Eingangswelle, einer koaxialen Abtriebswelle und einer achsparallelen Vorgelegewelle, die zweiteilig ausgeführt und über eine Hohlradstufe trieblich zusammengeschaltet ist.

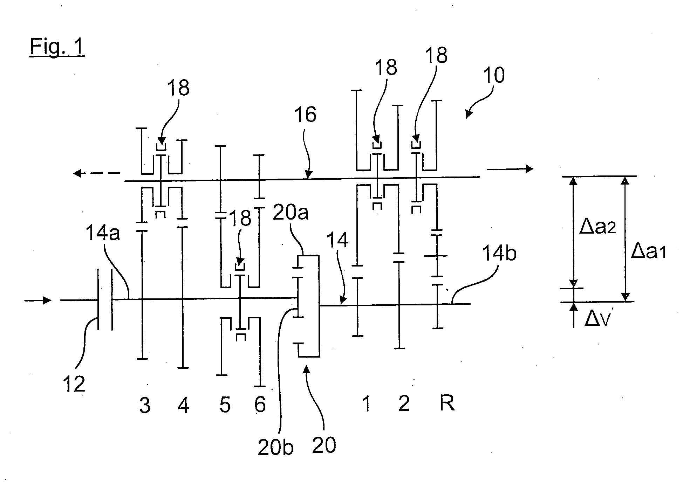

Die Fig. 1 bis 7 betreffen Vergleichsbeispiele, die nicht von der Erfindung umfasst sind. In der Fig. 1 ist als Blockschaltbild und ohne Getriebegehäuse ein Geschwindigkeits-Wechselgetriebe bzw. Schaltgetriebe 10 für Kraftfahrzeuge dargestellt, mit einer über eine Trennkupplung 12 mit einem Antriebsaggregat (nicht dargestellt) verbindbaren Eingangswelle 14 und einer Abtriebswelle 16.

Zwischen den Wellen 14, 16 sind miteinander kämmende Zahnräder von Gangzahnradsätzen für sechs Vorwärtsgänge 1 bis 6 und einen Rückwärtsgang R angeordnet. Die Loszahnräder der Gangzahnradsätze 1 bis 6 und des Rückwärtsganges R sind über nur angedeutete Synchronkupplungen 18 in bekannter Weise schaltbar und somit mit den korrespondierenden Festzahnrädern auf der jeweils anderen Welle 14, 16 verbindbar.

Die zweigeteilte Eingangswelle 14 des Getriebes 10 ist über eine Hohlradstufe 20 mit einem im Durchmesser größeren, innenverzahnten Hohlrad 20a und einem mit diesem in Eingriff befindlichen Stirnzahnrad 20b zusammengeschaltet, wobei die das Stirnzahnrad 20b tragende Teilwelle 14a die Zahnräder der Gangzahnradsätze 3 bis 6 und die mit dem Hohlrad 20a verbundene Teilwelle 14b Zahnräder der Gangzahnradsätze 1, 2 und R trägt. Der Gangzahnradsatz R weist in üblicher Weise zusätzlich ein Umkehrzahnrad auf.

Während die durchgehende, einteilige Abtriebswelle 16 über eine erste Drehachse im Getriebegehäuse drehbar gelagert ist, sind die dazu achsparallelen Drehachsen der Teilwellen 14a, 14b der Eingangswelle 14, wie ersichtlich ist, mit einem Achsversatz Δv von wenigen Millimetern zueinander versetzt. Dabei weist die das Hohlrad 20a tragende Teilwelle 14b einen größeren Achsabstand Δa₁ zur Abtriebswelle 16b auf als die mit reduziertem Achsabstand Δa₂ angeordnete Teilwelle 14a.

Durch die Auslegung der Hohlradstufe 20 (Durchmesser, Zähnezahlen) kann der gewünschte Achsversatz Δv und das Übersetzungsverhältnis der Hohlradstufe 20 bestimmt werden. Der Achsversatz Δv ermöglicht zudem größere, konstruktive Freiheitsgrade bei der Übersetzungsäuslegung und der Unterbringung der auf der Teilwelle 14b befindlichen, niedrigeren Vorwärtsgänge 1, 2 und gegebenenfalls des Rückwärtsganges R.

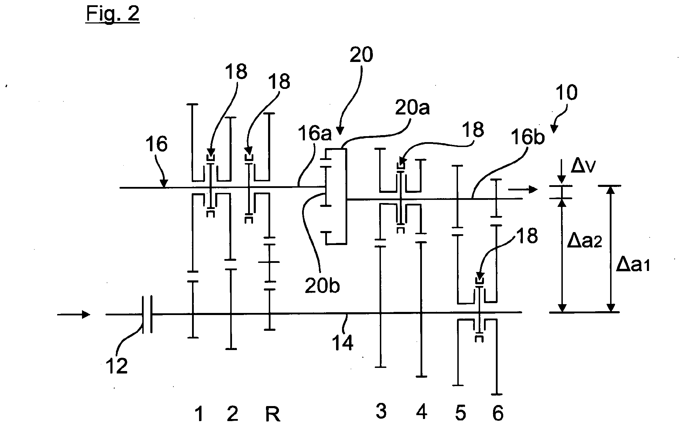

Die Fig. 2 bis 8 zeigen alternative Vergleichsbeispiele, die zur Vermeidung von Wiederholungen nur soweit beschrieben sind, als sie sich wesentlich von dem Vergleichsbeispiel der Fig. 1 unterscheiden. Funktionell gleiche Teile sind mit gleichen Bezugszeichen versehen.

Gemäß Fig. 2 ist die Hohlradstufe 20 auf der Abtriebswelle 16 des Schaltgetriebes 10 angeordnet.

Dazu ist die Abtriebswelle 16 zweiteilig mit einer Teilwelle 16a und einer Teilwelle 16b mit der dazwischen angeordneten Hohlradstufe 20 ausgeführt. Auf der einen größeren Achsabstand Δa1 zur einteiligen Eingangswelle 14 aufweisenden Teilwelle 16a sind das Stirnzahnrad 20b und die Zahnräder der niedrigeren Gangzahnradsätze 1, 2 und R angeordnet, während die zweite Teilwelle 16b die Zahnräder der höheren Gangzahnradsätze 3 bis 6 und das Hohlrad 20a trägt.

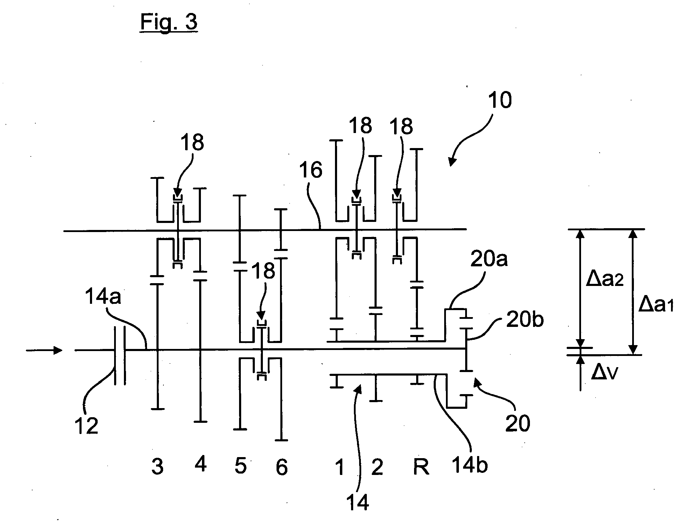

Die Fig. 3 zeigt eine zur Fig. 1 alternative Auslegung der zweigeteilten Eingangswelle 14 des Schaltgetriebes 10, bei der die Hohlradstufe 20 an dem einen, stirnseitigen Ende der Eingangswelle 14 bzw. an der durchgehenden Teilwelle 14a und an einer rücktreibenden Hohlwelle 14b als zweite Teilwelle angeordnet ist bzw. diese trieblich miteinander verbindet.

Die einen größeren Achsabstand Δa1 zur Abtriebswelle 16 aufweisende Hohlwelle 14b trägt dabei das Hohlrad 20a und die Zahnräder der niedrigeren Gangzahnradsätze 1, 2 und R, während die erste Teilwelle 14a mit dem Stirnzahnrad 20b der Hohlradstufe 20 und den Zahnrädern der höheren Gangzahnradsätze 3 bis 6 trieblich verbunden ist.

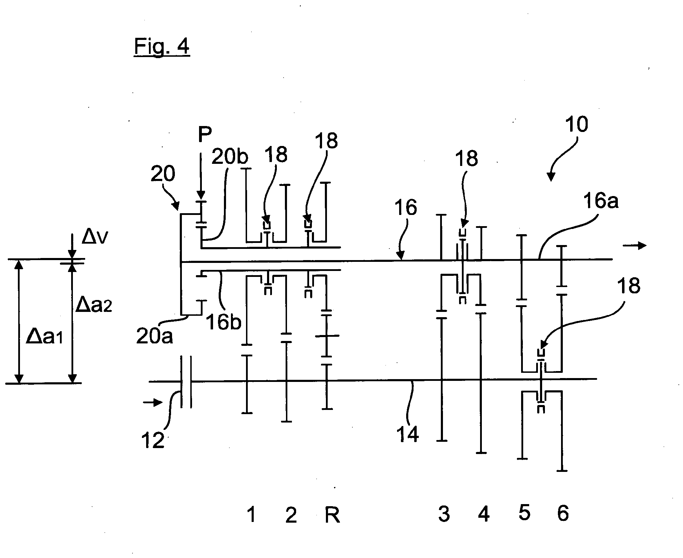

Im Vergleichsbeispiel gemäß Fig. 4 ist die Hohlradstufe 20 an dem einen stirnseitigen Ende der zweigeteilten Abtriebswelle 16 vorgesehen.

Die Abtriebswelle 16 weist dazu eine durchgehende Teilwelle 16a und eine rücktreibende Hohlwelle 16b auf, die mittels der Hohlradstufe 20 trieblich zusammengeschaltet sind.

Die Teilwelle 16a trägt dabei ein Hohlrad 20a und die Zahnräder der niedrigeren Zahnradsätze 1, 2, R und weist dementsprechend einen größeren Achsabstand Δa1 zur einteiligen Eingangswelle 14 auf als die Hohlwelle 16b mit dem Stirnzahnrad 20b und den Zahnrädern der höheren Gangzahnradsätze 3 bis 6.

Abweichend zu den vorstehend beschriebenen Hohlradstufen 20 ist das Hohlrad 20a zusätzlich mit einer Außenverzahnung versehen, die im Zusammenwirken mit einer im Getriebegehäuse schwenkbar angeordneten Klinke (nicht dargestellt) eine Parksperre P bildet. Bei eingefahrener Klinke ist das Hohlrad 20a und mit diesem die abtreibende Teilwelle 16a im Getriebegehäuse des Schaltgetriebes 10 blockiert. Ggf. kann die Außenverzahnung auch als Abtriebsstufe eingesetzt werden.

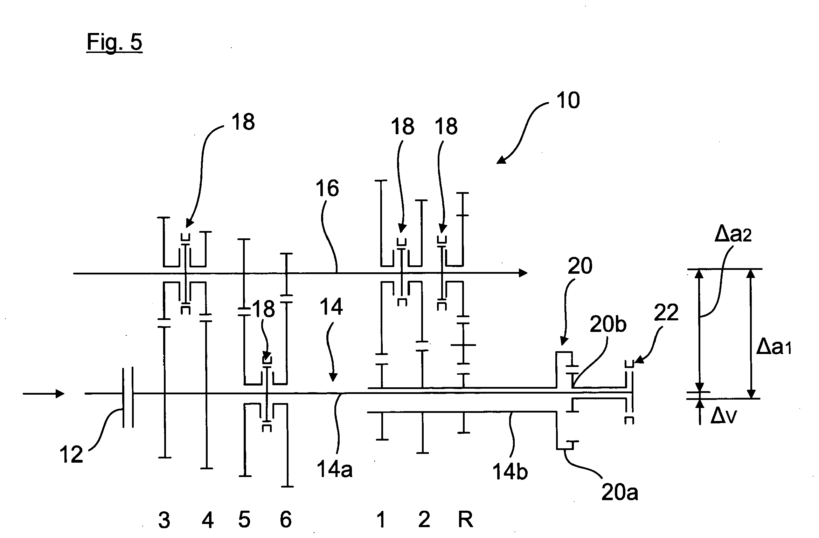

Die Fig. 5 zeigt ein zur Fig. 3 alternatives Vergleichsbeispiel, bei dem die Antriebsverbindung über die Hohlradstufe 20 auf der Eingangswelle 14 des Schaltgetriebes 10 mittels einer Schaltkupplung 22 (dies kann zum Beispiel eine bei Schaltgetrieben übliche Synchronkupplung 18 sein) unterbrochen werden kann.

Bei geschlossener Schaltkupplung 22 ist das Stirnzahnrad 20b der Hohlradstufe 20 mit der durchgehenden Teilwelle 14a gekuppelt, während es bei geöffneter Schaltkupplung 22 frei auf der Teilwelle 14a drehen kann.

Die auf der Hohlwelle 14b befindlichen Zahnräder der niedrigeren Gangzahnradsätze 1, 2, R sind Festzahnräder, die mit über Synchronkupplungen 18 schältbaren Loszahnräder auf der Abtriebswelle 16 in Eingriff sind.

Während die Anordnung Festzahnräder - Loszahnräder der Gangzahnradsätze 1 bis 6 und R auf der Eingangswelle 14 und der Abtriebswelle 16 in den Vergleichsbeispielen durch konstruktive Überlegungen ausgeführt sein kann, ist im Vergleichsbeispiel gemäß Fig. 5 wesentlich, dass die Festzahnräder der Gangzahnradsätze 1, 2 und R auf der Hohlwelle 14b positioniert sind. Daraus resultiert, dass bei abgekuppelter Hohlwelle 14b in den höheren Gängen 3 bis 6 sämtliche Zahnräder der Gangzahnradsätze 1, 2 und R stillstehen, also keine Antriebsverluste bewirken bzw. keinem Verschleiß unterliegen.

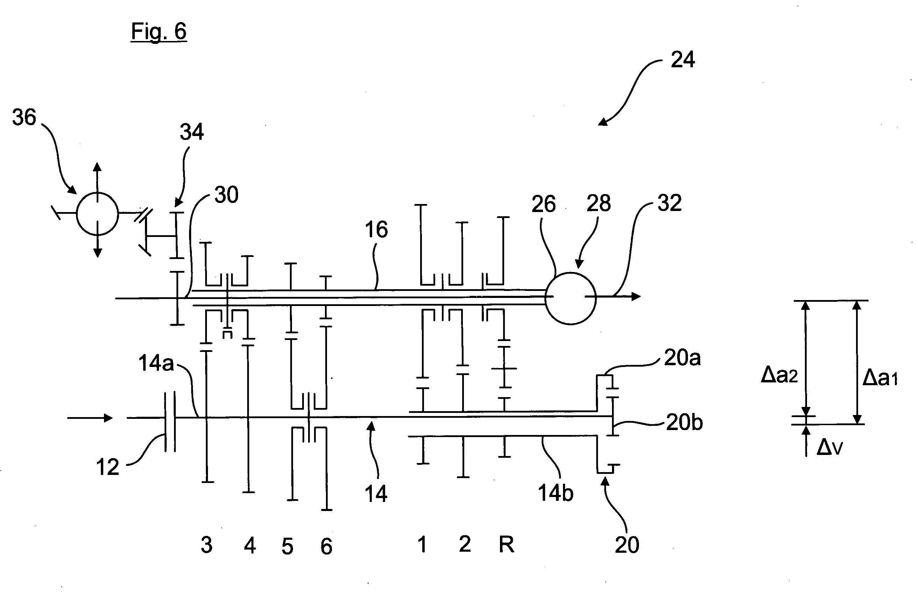

Die Fig. 6 zeigt ein weiteres Vergleichsbeispiel mit einem Schaltgetriebe 24 für allradgetriebene Kraftfahrzeuge, bei dem die Abtriebswelle 16 als Hohlwelle ausgeführt ist, auf der die Zahnräder der Gangzahnradsätze 1 bis 6 und R angeordnet sind.

Die Eingangswelle 14 ist wiederum zweiteilig mit einer Teilwelle 14a und einer Hohlwelle 14b konzipiert, die über die Hohlradstufe 20 wie vorbeschrieben zusammengeschaltet sind.

Die Abtriebswelle 16 treibt auf das Ausgleichsgehäuse 26 eines in das Getriebegehäuse integrierten Zwischenachsdifferenziales 28 ab, dessen eine Ausgangswelle 30 über einen Stirnradtrieb 34 ein Vorderachsdifferenzial 36 des Kraftfahrzeugs antreibt, während die zweite Ausgangswelle 32 in nicht weiter dargestellter Weise auf die Hinterachse des Kraftfahrzeugs abtreibt. Das dargestellte Schaltgetriebe 24 könnte sowohl für den Längseinbau als auch für einen Quereinbau im Kraftfahrzeug verwendet sein. Gleiches gilt auch für die vorstehend beschriebenen Schaltgetriebe 10.

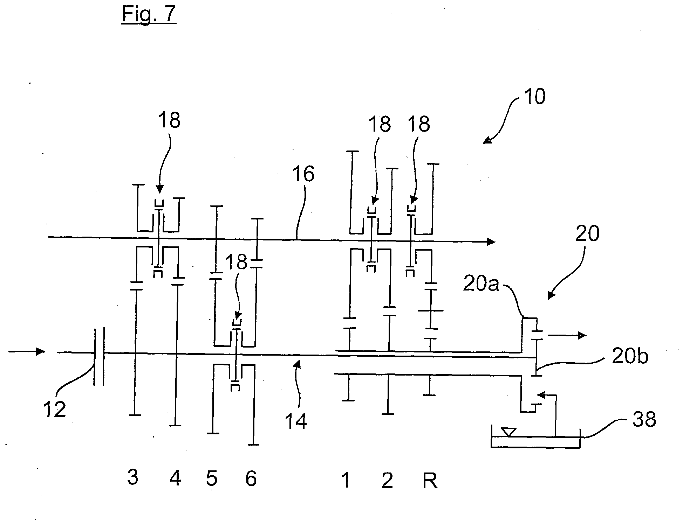

Bei dem Schaltgetriebe 10 gemäß Fig. 7 ist die Hohlradstufe 20 an der freien Stirnseite der Eingangswelle 14 bzw. der Hohlwelle 14b angeordnet.

Neben dessen Funktion als Übersetzungsstufe ist im Zusammenwirken mit Gehäuseelementen des Schaltgetriebes 10 die Hohlradstufe 20 als Zahnradsichelpumpe ausgebildet, die Hydraulikfluid, zum Beispiel Getriebeöl, aus einem Ölsumpf 38 wie mit den Pfeilen angedeutet ansaugt und einer nicht dargestellten, elektrohydraulischen Getriebesteuerung unter Druck zuführt. Die Zahnradsichelpumpe kann bekannter Bauart mit in dem Gehäuse ausgebildeter Saug- und Druckniere und entsprechend vorgesehenen Saug- und Förderkanälen ausgeführt sein.

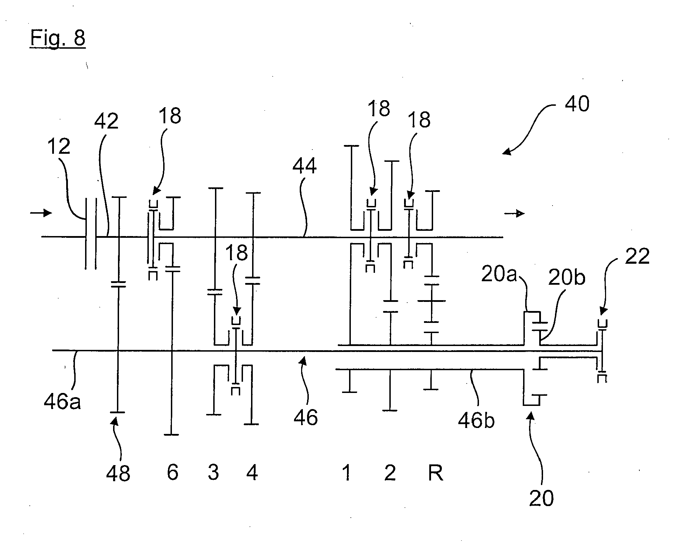

Schließlich zeigt die Fig. 8 ein erfindungsgemäßes Schaltgetriebe 40 mit einer Eingangswelle 42, einer koaxialen Abtriebswelle 44 und einer achsparallelen Vorgelegewelle 46, wobei die Vorgelegewelle 46 zweiteilig ausgeführt ist und die Hohlradstufe 20 mit der Schaltkupplung 22 aufweist.

Die Vorgelegewelle 46 setzt sich aus einer Teilwelle 46a und einer rücktreibenden Hohlwelle 46b zusammen, die über die Hohlradstufe 20 wie vorstehend beschrieben zusammengeschaltet sind.

Neben den zwischen der Abtriebswelle 44 und der Vorgelegewelle 46 angeordneten Zahnrädern der Gangzahnradsätze 3, 4, 6 bzw. 1, 2, R ist ein fester (nicht schaltbarer) Zahnradsatz 48 auf der Eingangswelle 42 und der Vorgelegewelle 46a vorgesehen, über den die Vorgelegewelle 46 ständig angetrieben ist.

Ferner kann über die zwischen der Eingangswelle 42 und der Abtriebswelle 44 vorgesehene Synchronkupptung 18 neben dem Vorwärtsgang 6 ein Direkttrieb zum Beispiel als Vorwärtsgang 5 geschaltet werden, bei dem die Eingangswelle 42 und die Abtriebswelle 44 direkt miteinander verbunden sind.

Über den Zahnradsatz 48 angetrieben können die Vorwärtsgänge 3, 4, 6 bzw. über die Hohlradstufe 20 die Vorwärtsgänge 1, 2 und der Rückwärtsgang R wie vorstehend beschrieben geschaltet werden. Zudem können mittels der Schaltkupplung 22 die Gangzahnradsätze der Vorwärtsgänge 1, 2 und des Rückwärtsganges R beim Fahren in den höheren Vorwärtsgängen 3 bis 6 stillgesetzt werden.

Ferner kann über die zwischen der Eingangswelle 42 und der Abtriebswelle 44 vorgesehene Synchronkupplung 18 neben dem Vorwärtsgang 6 ein Direkttrieb zum Beispiel als Vorwärtsgang 5 geschaltet werden, bei dem die Eingangswelle 42 und die Abtriebswelle 44 direkt miteinander verbunden sind.

Über den Zahnradsatz 48 angetrieben können die Vorwärtsgänge 3, 4, 6 bzw. über die Hohlradstufe 20 die Vorwärtsgänge 1, 2 und der Rückwärtsgang R wie vorstehend beschrieben geschaltet werden. Zudem können mittels der Schaltkupplung 22 die Gangzahnradsätze der Vorwärtsgänge 1, 2 und des Rückwärtsganges R beim Fahren in den höheren Vorwärtsgängen 3 bis 6 stillgesetzt werden.

## Patentansprüche

1. Geschwindigkeits-Wechselgetriebe für Kraftfahrzeuge, mit mehreren Vorwärtsgängen und einem Rückwärtsgang, mit zumindest einer Eingangswelle (42), einer Abtriebswelle (44) und einer Vorgelegewelle (46), zwischen denen über Synchronkupplungen schaltbare Loszahnräder und Festzahnräder von Gangzahnradsätzen angeordnet sind, wobei die Vorgelegewelle (46) zweiteilig mit zwei Teilwellen (46a, 46b) ausgeführt ist, welche Teilwellen (46a, 46b) mit zueinander unterschiedlichen, mit einem Achsversatz (Δv) versetzten Drehachsen im Getriebegehäuse gelagert, sind, und dass funktionell zwischen den beiden Teilwellen (46a, 46b) eine Hohlradstufe (20) mit einem innenverzahnten Hohlrad (20a) und einem mit diesem kämmenden, außenverzahnten Stirnzahnrad (20b) vorgesehen ist, wobei die Eingangswelle (42) und die Abtriebswelle (44) koaxial angeordnet sind und wobei auf der Gangzahnräder tragenden Vorgelegewelle (46) die Hohlradstufe (20) angeordnet ist.

2. Wechselgetriebe nach Anspruch 1, **dadurch gekennzeichnet, dass** die Antriebsverbindung an der Hohlradstufe (20) über eine schaltbare Kupplung (22) unterbrechbar ist.

3. Wechselgetriebe nach einem der vorhergehenden Ansprüche, **dadurch gekennzeichnet, dass** die Hohlradstufe (20) zugleich als Zahnradsichelpumpe zum Fördern von Schmieröl oder Hydrauliköl ausgebildet ist.

## Claims

1. Change-speed transmission for motor vehicles having a plurality of forward gears and a reverse gear, comprising at least one input shaft (42), a drive shaft (44) and a layshaft (46), between which idler gear wheels, which can be shifted via synchronous clutches, and fixed gear wheels of gear wheel sets are arranged, wherein the layshaft (46) is configured two-part with two subshafts (46a, 46b), which subshafts (46a, 46b) with different rotation axes offset to each other by an axial offset (Δv) are supported in the transmission housing, and that a ring gear stage (20) with an internally splined ring gear (20a) and an externally splined spur gear (20b) which meshes with the ring gear is functionally provided between the two subshafts (46a, 46b), wherein the input shaft (42) and the drive shaft (44) are arranged coaxially and wherein the ring gear stage (20) is arranged on the layshaft (46) carrying the gear wheels.

2. Change-speed transmission according to claim 1, **characterised in that** the drive connection can be interrupted on the ring gear stage (20) via a shiftable clutch (22).

3. Change-speed transmission according to any one of the preceding claims, **characterised in that** the ring gear stage (20) is at the same time configured as gear wheel crescent pump for delivering lubricant oil or hydraulic oil.

## Revendications

1. Boîte de vitesses pour véhicules automobiles, avec plusieurs rapports de marche avant et un rapport de marche arrière, avec au moins un arbre d'entrée (42), un arbre d'entraînement (44) et un arbre intermédiaire (46), entre lesquels sont agencées des roues dentées folles et des roues dentées fixes, commutables par l'intermédiaire d'embrayages synchrones, de trains de roues dentées de rapport,
dans laquelle l'arbre intermédiaire (46) est réalisé en deux parties avec deux arbres partiels (46a, 46b), lesquels arbres partiels (46a, 46b) sont logés dans le carter de boîte avec des axes de rotation différents l'un de l'autre et décalés d'un décalage d'axe (Δv),
dans laquelle il est prévu fonctionnellement entre les deux arbres partiels (46a, 46b) un étage de roue à denture intérieure (20) avec une roue à denture intérieure (20a) et avec une roue dentée conique (20b) à denture extérieure s'engrenant avec la roue à denture intérieure,
dans laquelle l'arbre d'entrée (42) et l'arbre d'entraînement (44) sont agencés de manière coaxiale
et dans laquelle l'étage de roue à denture intérieure (20) est agencé sur l'arbre intermédiaire (46) portant des trains de roues dentées de rapport.

2. Boîte de vitesses selon la revendication 1, **caractérisée en ce que** la liaison motrice peut être interrompue au niveau de l'étage de roue à denture intérieure (20) par l'intermédiaire d'un embrayage (22) commutable.

3. Boîte de vitesses selon l'une des revendications précédentes, **caractérisée en ce que** l'étage de roue à denture intérieure (20) est réalisé en même temps comme une pompe à tambour en croissant à roue dentée afin de transporter de l'huile lubrifiante ou de l'huile hydraulique.
